# EUROPEAN PATENT APPLICATION

(11) **EP 0 764 706 A1**
(43) Date of publication of application: **26.03.1997**
(21) Application number: 96306470.4
(22) Date of filing: 05.09.1996
(51) Int. Cl.: C09J 123/28, C09J 155/02

(54) **Hot melt adhesive based on chlorinated polyolefin and graft copolymer**

(30) Priority: 19.09.1995 US 530548
(71) Applicant: GENERAL ELECTRIC COMPANY, Schenectady, NY 12345 (US)
(72) Inventor: Wypart, Roman W., Parkersburg, West Virginia 26101 (US); Avakian, Roger W., Parkersburg, West Virginia 26101 (US); Treadway, Keith Duwayne, Marietta, Ohio 45750 (US)
(74) Representative: Szary, Anne Catherine, Dr.

(57) **Abstract**

A chlorinated polyolefin/graft copolymer thermoplastic composition is provided which exhibits enhanced levels of adhesion. The composition contains (a) a graft copolymer having a vinyl aromatic-diene rubber substrate and (b) a relatively high molecular weight chlorinated polyolefin. The composition is useful as a hot melt adhesive.

## Description

The present invention relates to hot melt adhesive compositions, and more particularly relates to hot melt adhesive compositions containing a thermoplastic elastomer and a graft copolymer.

### DESCRIPTION OF THE RELATED ART

Thermoplastic elastomers are known, and have been used in the past as hot melt adhesives. Graft copolymers have been blended with such thermoplastic elastomers to modify various properties thereof. For example, a general teaching of blends of graft copolymers with chlorinated polyethylene is set out in Grabowski et al., U.S. Patent 3,494,982, issued February 10, 1970 which is incorporated herein by reference. One problem with such compositions, however, can be a less than desired level of adhesiveness in hot melt adhesive applications.

Consequently, there is a need to provide thermoplastic elastomer chlorinated polyolefin/graft copolymer compositions exhibiting enhanced levels of adhesiveness.

### Summary of the Invention

The present invention involves a thermoplastic elastomeric composition comprising (a) a chlorinated polyethylene and (b) a graft copolymer comprising a high level of a vinyl aromatic-diene rubber substrate. The composition exhibits enhanced levels of adhesiveness, and the compositions are especially useful as hot melt adhesives.

### Detailed Description of the Invention

A thermoplastic elastomer composition is provided comprising (a) a chlorinated polyolefin and (b) a graft copolymer comprising (i) a rigid polymeric superstrate and (ii) a rubber substrate wherein the rubber substrate is a present at a level of from 65 to 90 percent by weight based on the total weight of the graft copolymer. Preferably. the chlorinated polyolefin is present at a level of 40 to 95 percent by weight based on the total weight of the composition, more preferably from 45 to 85 percent by weight thereof, and most preferably from 50 to 75 percent by weight thereof. Preferably the graft copolymer is present at a level of from 5 to 60 percent by weight based on the total weight of the composition, more preferably from 15 to 55 percent by weight thereof, and most preferably from 25 to 50 percent by weight thereof.

The chlorinated polyolefin contains chlorine at a level of from 20 to 55 percent by weight based on the total weight of the chlorinated polyolefin, more preferably from 25 to 45 percent by weight thereof, and most preferably from 33 to 38 percent by weight thereof. The chlorinated polyolefin preferably has a relatively low chlorine content to reduce the hardness of the final composition. The chlorinated polyolefin is preferably a chlorinated polyolefin having a weight number average molecular weight of between 30,000 and 1,500,000, more preferably between 50,000 and 500,000 and most preferably between 100,000 and 300,000. The chlorinated polyolefin preferably has a weight average molecular weight of greater than 100,000.

The graft copolymers are generally prepared by graft polymerization of a mixture of a monovinylidene aromatic monomer and one or more comonomers in the presence of one or more rubbery polymeric substrates. Depending on the amount of rubber present, a separate matrix or continuous rigid phase of ungrafted rigid (co)polymer may be simultaneously obtained along with the graft polymer.

The graft copolymer is most preferably a vinyl aromatic-vinyl cyanide-diene rubber graft copolymer comprising (i) a vinyl aromatic-vinyl cyanide and (ii) a diene rubber substrate.

Monovinylidene aromatic monomers (vinyl aromatic monomers) which may be employed include styrene, alpha-methyl styrene, halostyrenes i.e. dibromostyrene, mono or di alkyl, alkoxy or hydroxy substitute groups on the nuclear ring of the monovinylidene aromatic monomer i.e. vinyl toluene, vinylxylene, butylstyrene, para-hydroxystyrene or methoxystyrene or mixtures thereof. The moncvinylidenearomatic monomers utilized are generically described by the following formula: 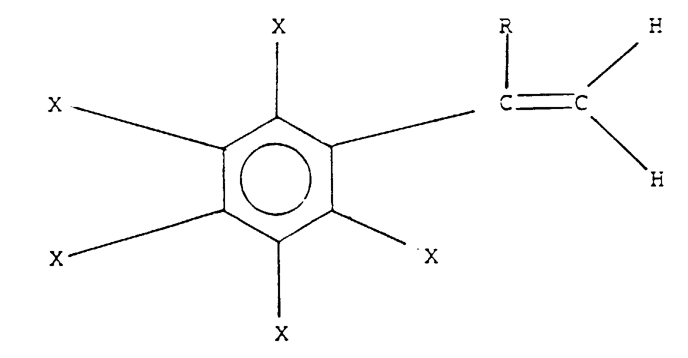 wherein X is selected from the group consisting of hydrogen, alkyl groups of 1 to 5 carbon atoms, cycloalkyl, aryl, alkaryl, aralkyl, alkoxy, aryloxy, and halogens. R is selected from the group consisting of hydrogen, alkyl groups of 1 to 5 carbon atoms and halogens such as bromine and chlorine. Examples of substituted vinylaromatic compounds include styrene, 4-methylstyrene, 3,5-diethylstyrene, 4-n-propylstyrene, α-methylstyrene, α-methyl vinyltoluene, α-chlorostyrene, α-bromostyrene, dichlorostyrene, dibromostyrene, tetrachlorostyrene, mixtures thereof and the like. The preferred monovinylidene aromatic monomers used are styrene and/or α-methylstyrene.

Comonomers which may be used with the monovinylidene aromatic monomer includes acrylonitrile, methacrylonitrile, C₁ to C₁₄ alkyl or aryl substituted acrylate, C₁ to C₁₄ alkyl, aryl, haloaryl substituted methacrylate, acrylic acid, methacrylic acid, itaconic acid, acrylamide, N-substituted acrylamide or methacrylamide, maleic anhydride, maleimide, N-alkyl, aryl or haloaryl substituted maleimide, glycidyl (meth)acrylates, hydroxy alkyl (meth)acrylates or mixtures thereof. The acrylonitrile, substituted acrylonitrile, or acrylic acid esters are described generically by the following formula: 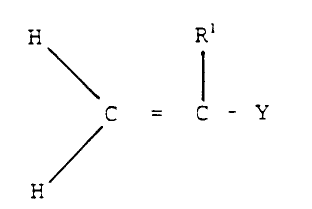 wherein R¹ may be selected from the same group set out for R as previously defined and Y is selected from the group consisting of cyano and carbalkoxy groups wherein the alkoxy group of the carbalkoxy contains from one or about twelve carbon atoms. Examples of such monomers include acrylonitrile. ethacrylonitrile, methacrylonitrile, α-chloroacrylonitrile, α-bromoacrylonitrile, methyl acrylate, methyl methacrylate, ethyl acrylate, butyl acrylate, propylacrylate, isopropyl acrylate and mixtures thereof. The preferred monomer is acrylonitrile and the preferred acrylic acid esters are ethyl acrylate and methyl methacrylate. It is also preferred that the acrylic acid esters, when included, are employed in combination with styrene or acrylonitrile.

The rubber modified graft copolymer comprises (i) the rubber substrate, and (ii) a rigid polymeric superstrate portion grafted to the rubber substrate. The rubber substrate is preferably present in the graft copolymer at a level of at least 65 percent by weight based on the total weight of the graft copolymer, more preferably from 65 to 90 percent by weight based on the total weight of the graft copolymer, more preferably from 65 to 80 percent by weight thereof, and the rigid superstrate is preferably present at a level of from 10 to 35 percent by weight based on the total weight of the graft copolymer, more preferably from 20 to 35 percent by weight thereof.

Examples of rubbery polymers for the substrate include: conjugated dienes, copolymers of a diene with styrene, acrylonitrile, methacrylonitrile or C₁ to C₈ alkyl acrylate which contain at least 50% (preferably at least 65% by weight) conjugated dienes, polyisoprene or mixtures thereof; olefin rubbers i.e. ethylene propylene copolymer (EPR) or ethylene propylene non-conjugated diene (EPDM); silicone rubbers; or C₁ or C₈ alkyl acrylate homopolymers or copolymers.

The diene rubbers may preferably be polybutadiene, polyisoprene and copolymers of butadiene with up to 35% by weight of comonomers such as styrene, acrylonitrile, methylmethacrylate or C₁-C₈-alkylacrylate which are produced by aqueous radical emulsion polymerisation. The acrylate rubbers may be cross-linked, particulate emulsion copolymers substantially of C₁-C₈-alkylacrylate, in particular C₂-C₆-alkylacrylate, optionally in admixture with up to 15% by weight of comonomers such as styrene, methylmethacrylate, butadiene, vinyl methyl ether or acrylonitrile and optionally up to 5% by weight of a polyfunctional crosslinking comonomer, e.g. divinylbenzene, glycol-bis-acrylates or methylacrylates, bisacrylamides, phosphoric acid triallylester, citric acid triallylester, allylesters of acrylic acid or methacrylic acid, triallylcyanurate, triallylisocyanurate. Also suitable are mixtures of diene- and alkylacrylate rubbers and rubbers which have a so-called core/shell structure, e.g. a core of diene rubber and a shell of acrylate or vice versa.

Specific conjugated diene monomers normally utilized in preparing the rubber substrate of the graft polymer are generically described by the following formula: 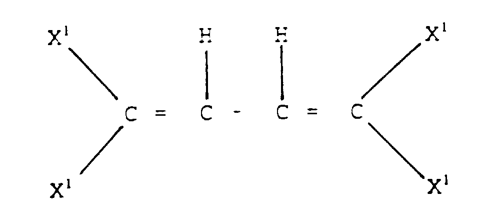 wherein X¹ is selected from the group consisting of hydrogen, alkyl groups containing from one to five carbon atoms, chlorine or bromine. Examples of dienes that may be used are butadiene, isoprene, 1,3-heptadiene, methyl-1,3-pentadiene, 2,3-dimethylbutadiene, 2-ethyl-1,3-pentadiene 1,3- and 2,4-hexadienes, chloro and bromo substituted butadienes such as dichlorobutadiene, bromobutadiene, dibromobutadiene, mixtures thereof, and the like. A preferred conjugated diene is 1,3 butadiene.

The substrate polymer, as mentioned, is preferably a conjugated diene polymer such as polybutadiene, polyisoprene, or a copolymer, such as butadiene-styrene, butadiene-acrylonitrile, or the like. The rubbery polymeric substrate portion must exhibit a glass transition temperature (Tg) of less than about 0°C.

Mixtures of one or more rubbery polymers previously described for preparing the graft copolymers, or mixtures of one or more rubber modified monovinylidene aromatic graft polymers disclosed herein may alsc be employed. Furthermore, the rubber may comprise either a block or random copolymer. The rubber particle size used in this invention as measured by simple light transmission methods or capillary hydrodynamic chromatography (CHDF) may have an average particle size by weight of select one of the following: 0.05 to 1.2 microns, preferably 0.09 to .6 microns, for emulsion based polymerized rubber latices or 0.5 to 10 microns, preferably 0.6 to 1.5 microns, for mass polymerized rubber substrates which also have included grafted monomer occlusions. The rubber substrate is preferably a particulate, highly crosslinked diene or alkyl acrylate rubber, and preferably has a gel content greater than 70%.

Preferred graft superstrates include copolymers of styrene and acrylonitrile, copolymers of α-methylstyrene and acrylonitrile and methylmethacrylate polymers or copolymers with up to 50% by weight of C₁-C₆ alkylacrylates, acrylonitrile or styrene or styrene and acrylonitrile. Specific examples of monovinylidene aromatic graft copolymers include but are not limited to the following: acrylonitrile-butadiene-styrene (ABS), acrylonitrile-styrene-butyl acrylate (ASA), methylmethacrylate-acrylonitrile-butadiene-styrene (MABS), acrylonitrile-ethylene-propylene-non-conjugated diene-styrene (AES).

The ungrafted rigid polymers (typically free of rubber) are resinous, thermoplastic polymers of styrene, α-methylstyrene, styrenes substituted in the nucleus such as ρ-methylstyrene, methyl acrylate, methylmethacrylate, acrylonitrile, methacrylonitrile, maleic acid anhydride, N-substituted maleimide, vinyl acetate or mixtures thereof. Styrene/acrylonitrile copolymers, α-methylstyrene/acrylonitrile copolymers, methylmethacrylate/acrylonitrile, and methylmethacrylate/styrene/acrylonitrile copolymers are preferred.

The ungrafted rigid copolymers are known and may be prepared by radical polymerisation, in particular by emulsion, suspension, solution or bulk polymerisation. They preferably have number average molecular weights of from 20,000 to 200,000.

The number average molecular weight of the grafted rigid superstrate of the graft copolymer is preferably in the range of 20,000 to 350,000. The ratio of monovinylidene aromatic monomer to the second and optionally third monomer may range from 90/10 to 50/50 preferably 80/20 to 60/40. The third monomer may optional replace 0 to 50% of one or both of the first and second monomers.

These graft copolymers are preferably polymerized by processes or other techniques well known in the art.

Preferably the graft copolymer has a large particle size rubber to reduce the hardness of the final composition. Preferably the rubber substrate has a number average particle size diameter of between 0.05 and 1.2 microns, more preferably 0.08 and .6 microns and most preferably between 0.08 and .35 microns.

The present compositions exhibit reduced levels of hardness and enhanced levels of elongation. Preferably the composition has a shore hardness (Shore D and A) of less than 40 ShD, more preferably less than 90 ShA, and most preferably less than 80 ShA; and preferably has an elongation at break percent of at least 200%, more preferably at least 300% and most preferably at least 400% as measured by ASTM norm D638-89 crosshead speed 20 inches/min. Preferably the composition has a tensile strength (psi) as measured by ASTM norm D638-89 of at least 200 psi, more preferably at least 250 psi.

It is critical to the present invention to utilize a graft copolymer having a vinyl aromatic-diene rubber substrate present at a relatively high level in the graft copolymer. Preferably the graft copolymer is present at a relatively low level in the composition. The total level of rubber in the composition is preferably less than 45 percent by weight based on the total weight of the composition, and more preferably between 5 and 40 percent by weight thereof, and most preferably between 20 and 35 percent by weight thereof. Preferably the chlorinated polyolefin is a relatively high nolecular weight chlorinated polyethylene. The compositions may also contain or be free of amounts of fillers, extender, plasticizers, flame retardants, stabilizers, nucleating agents, blowing agents and pigments.

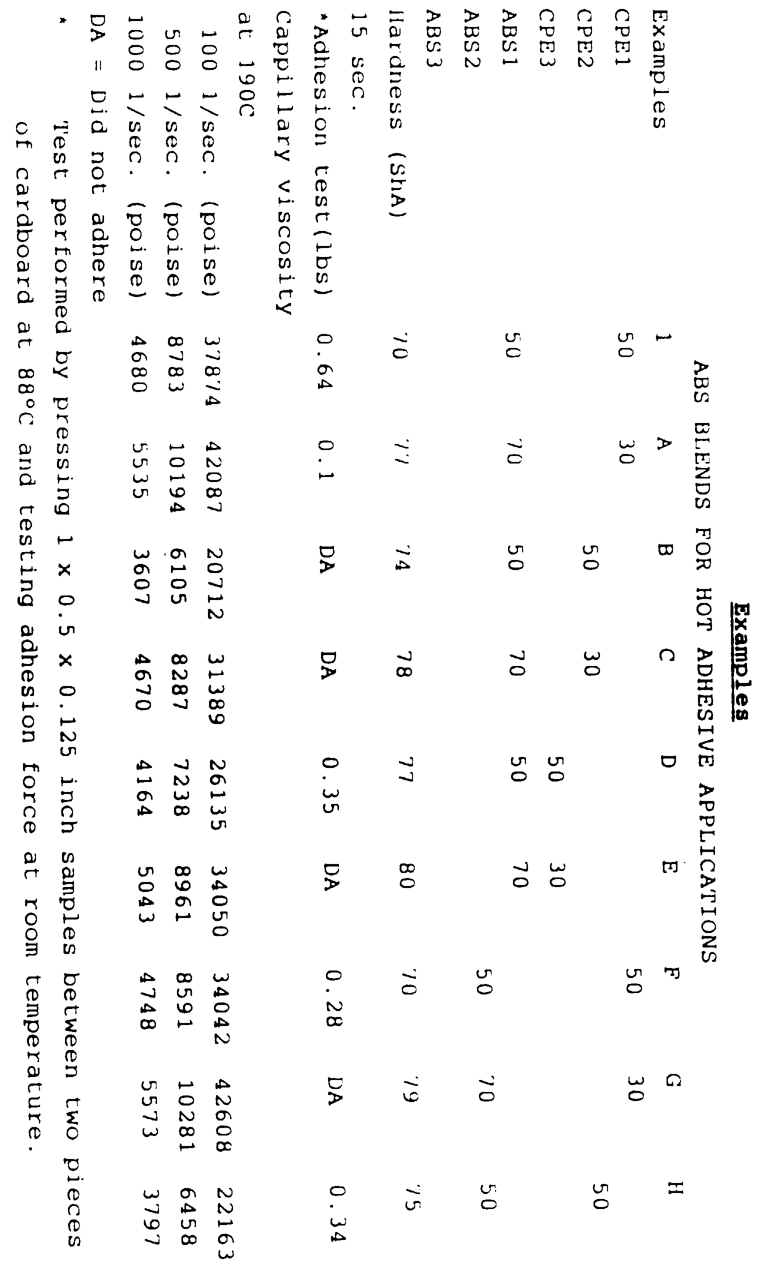

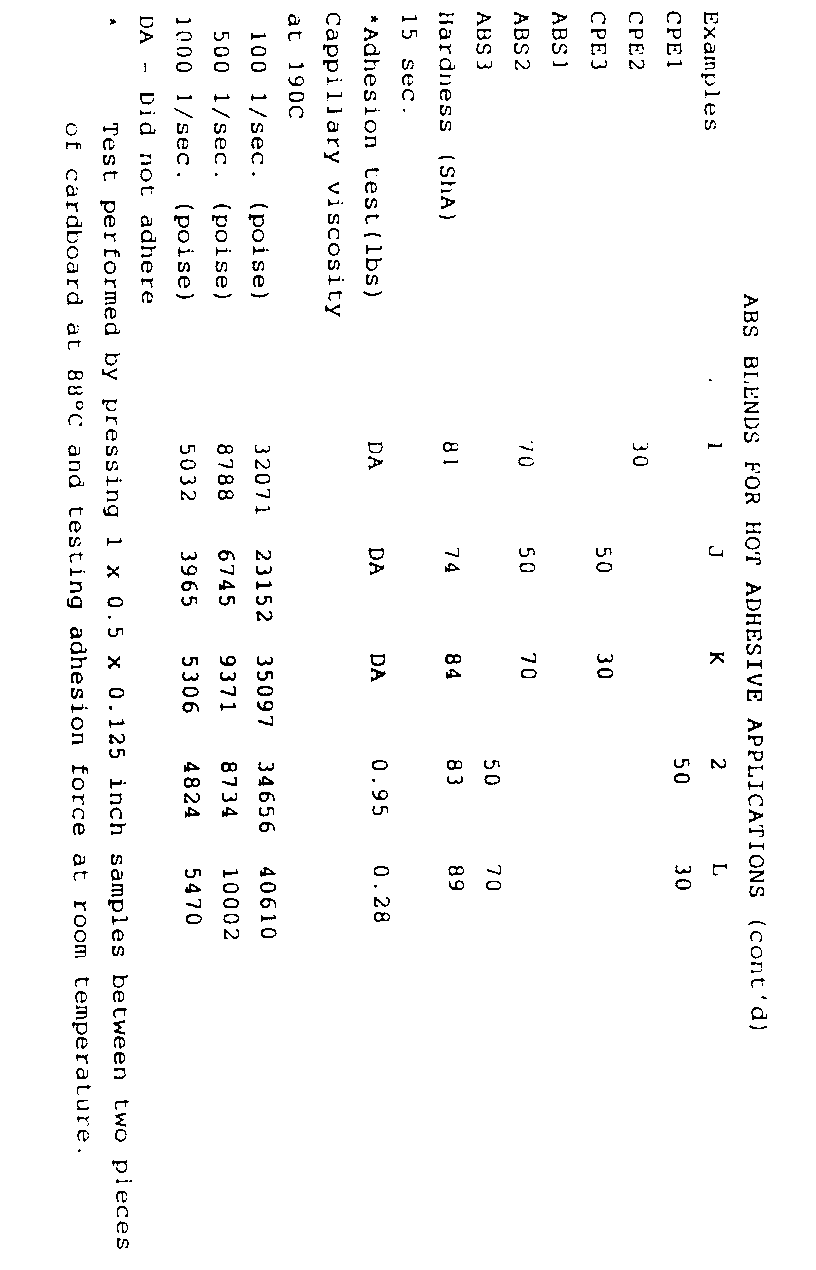

ABS1 is an ABS (Acrylonitrile-Butadiene-Styrene) graft copolymer having an SBR (Styrene-Butadiene Rubber) substrate present at a level of 65 percent by weight (65% SBR 2700 Angstroms number average diameter particle size (NADPS)) based on the total weight of the graft copolymer. ABS 2 is an ABS having 70% polybutadiene rubber (3000 Angstroms NADPS). ABS3 is an ABS having 65% SBR having a small particle size (65% SBR 1450 Angstroms NADPS)) (significantly smaller than substrate at ABS). CPE1 is a high molecular weight chlorinated polyethylene (CPE) having 36% Cl by weight and is sold as Tyrin 3615 resin (weight average Mw 200,000 to 300,000). CPE2 is a low molecular weight CPE having 36% Cl and is sold as Tyrin® 3611 resin (weight average molecular weight (Mw) of 50,000 to 100,000). CPE3 is a low molecular weight CPE resin having 42% Cl sold as Tyrin® 4211 (weight average molecular weight of 60,000 to 100,000) available from Dow Chemical Company. The compositions contained various stabilizer additives. The addition of high levels of additives can undesirably reduce adhesion.

## Claims

1. A thermoplastic composition useful as a hot melt adhesive, said composition comprising:
(a) a chlorinated polyolefin present at a level of from 40 to 95 percent by weight based on the total weight of the composition, said chlorinated polyolefin having a weight average molecular weight of greater than 100,000; and
(b) a graft copolymer comprising a vinyl aromatic-diene rubber substrate present at a level of at least 65 percent based on the total weight of the graft copolymer, said graft copolymer being present at a level of from 5 to 60 percent by weight based on the total weight of the composition.

2. The composition of Claim 1 wherein said chlorinated polyolefin is a chlorinated polyethylene.

3. The composition of claim 1 or claim 2 wherein said graft copolymer is an acrylonitrile-butadiene-styrene graft copolymer.

4. The composition of Claim 1 wherein said chlorinated polyolefin is present at a level of from 45 to 85 percent by weight based on the total weight of the composition.

5. The composition of Claim 1 wherein said chlorinated polyolefin is present at a level of from 50 to 75 percent by weight based on the total weight of the composition.

6. The composition of Claim 1 wherein said graft copolymer is present at a level of from 15 to 55 percent by weigh based on the total weight of the composition.

7. The composition of Claim 5 wherein said graft copolymer is present at a level of from 25 to 50 percent by weight based on the total weight of the composition.

8. The composition of any preceding claim wherein said composition comprises an additive selected from fillers, plasticizers, extenders, stabilizers, and pigments.

9. The composition of any preceding claim wherein said composition comprises a blowing agent.

10. A method for hot melt adhering of two surfaces, said method comprising:
(a) admixing a chlorinated polyolefin and a graft copolymer to form a thermoplastic composition, said chlorinated polyolefin being present at a level of from 25 to 95 percent by weight based on the total weight of the composition, said chlorinated polyolefin having a weight average molecular weight of greater than 100,000; and a graft copolymer comprising a vinyl aromatic-diene rubber substrate present at a level of at least 65 percent based on the total weight of the graft copolymer, said graft copolymer being present at a level of from 5 to 75 percent by weight based on the total weight of the composition;
(b) melting the composition;
(c) providing an amount of the melted composition between said surfaces; and
(d) allowing said composition to solidify.
